# EUROPEAN PATENT APPLICATION

(11) **EP 4 066 990 A1**
(43) Date of publication of application: **05.10.2022**
(21) Application number: 20892682.4
(22) Date of filing: 27.11.2020
(51) Int. Cl.: B23Q 11/00, B23Q 17/00, B23Q 17/24

(54) **DISPLAY DEVICE, MACHINE TOOL, AND LIQUID EJECTION METHOD**

(30) Priority: 29.11.2019 JP 2019216753
(71) Applicant: DMG Mori Co., Ltd., Yamatokoriyama-shi, Nara 639-1160 (JP)
(72) Inventor: KUBOTA, Junichi, Yamatokoriyama-shi, Nara 639-1160 (JP)
(74) Representative: Dantz, Jan Henning
(86) International application number: PCT/JP2020/044157
(87) International publication number: WO 2021/107076

(57) **Abstract**

There is a need for technology that enables accurate movement of chips without performing huge image processing. Provided is a display device for displaying an image captured by an imaging unit included in a machine tool. The machine tool includes a liquid ejection unit that ejects a liquid so as to move chips generated from a workpiece and the imaging unit that captures an image inside the machine tool. The display device includes: a display unit that displays the image captured by the imaging unit; a detection unit that detects an input to a predetermined position in the image displayed on the display unit; and a transmission unit that transmits an ejection signal for ejecting a liquid from the liquid ejection unit to a related area inside the machine tool related to the predetermined position, based on a detection signal according to the detection.

## Description

### [Technical Field]

The present disclosure relates to a display device for displaying chips generated during machining of a workpiece in a machine tool, a machine tool, and a liquid ejection method for removing the chips.

### [Background Art]

Machining a workpiece, which is a machining object, in a machine tool generates chips. As the chips accumulate and build up, the machining becomes difficult to continue. It has been therefore necessary to stop the operation of the machine tool periodically, and remove the chips manually with an air blower or the like, resulting in a decrease in the operational efficiency of the machine tool. Therefore, removing the chips without manual operation has been required.

As a technique to enable this, Patent Literature 1 discloses a chip removal device configured to capture an image of the table and the workpiece and detect the chip position.

### [Citation List]

### [Patent Literature]

[PTL 1] Japanese Laid-Open Pat Publication No. H7-108435

### [Summary of Invention]

### [Technical Problem]

In detecting chips from an image as disclosed in Patent Literature 1, however, a large number of chips and an internal environment of the machine tool are intricately photographed in various combinations in the image. It is therefore difficult to detect each chip precisely and accurately by image processing. If there are some chips that fail to be automatically recognized, the chips may remain unremoved in the machine tool. This may be prevented by detecting all chips; however, huge amount of calculation and time are required for such image processing.

It is an object of the present disclosure to provide a technique with which the chips can be effectively removed, without performing huge image processing.

### [Solution to Problem]

In view of the above, the present disclosure provides a technique as recited in the claims.

### [Advantageous Effects of Invention]

According to the present disclosure, it is possible to move the chips accurately, without performing huge image processing.

### [Brief Description of Drawings]

[FIG. 1A] A block diagram showing a configuration of an embodiment of a machining system.
[FIG. 1B] A block diagram showing a configuration of another embodiment of a machining system.
[FIG. 2] A diagram illustrating an example of mesh regions.
[FIG. 3] A schematic diagram of a captured image of the inside of a machine tool.
[FIG. 4] A diagram illustrating an example of a method of cleaning the inside of the machine tool shown in FIG. 3.
[FIG. 5] A block diagram showing a configuration of a chip recognition unit according to an embodiment of a machining system.
[FIG. 6] A flowchart for explaining an operation of a machining system.
[FIG. 7] A diagram illustrating an example of a display unit of a machining system displaying a coolant ejection path.
[FIG. 8] A diagram illustrating an example of a display unit of a machining system displaying a coolant ejection path.
[FIG. 9] A flowchart for explaining an operation of a machining system.
[FIG. 10] A flowchart for explaining an operation of a machining system.

### [Description of Embodiments]

Description will be given below of embodiments of the present disclosure, with reference to the drawings.

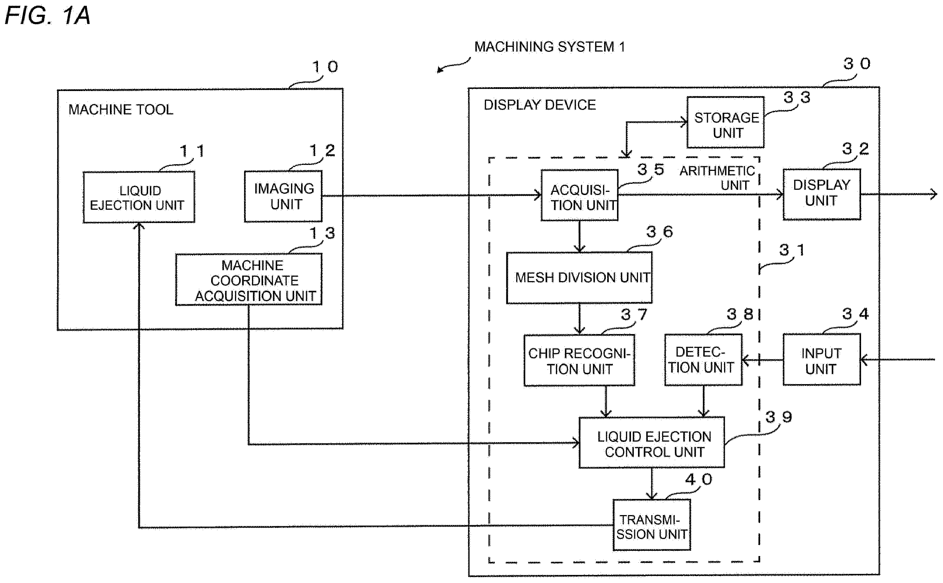

FIG. 1A shows a configuration of a machining system 1 according to the present embodiment. The machining system 1 includes a machine tool 10 and a display device 30. The machine tool 10 performs a machining, such as cutting and grinding, on a workpiece which is a machining object delivered into the machine tool. When a machining is performed on the workpiece, some portions of the workpiece are separated, to generate chips, which accumulate inside the machine tool.

### (Machining system)

The machine tool 10 includes a liquid ejection unit 11, an imaging unit 12, and a machine coordinate acquisition unit 13. The liquid ejection unit 11 includes, for example, a nozzle capable of ejecting a liquid, an actuator for driving the nozzle, and a pump for pumping up a liquid from a liquid reservoir in which a liquid is stored. By ejecting a liquid from the nozzle to the chips, the aforementioned chips can be moved onto a chip conveyor or the like installed outside the machining region, so that the chips can be eventually removed from the machining region. The liquid may be a coolant for cooling and lubricating parts that generate heat during machining, such as a workpiece and a main shaft which is a tool for machining, but not limited thereto, and other liquids may be used. In the following, in the present specification, the description is given provided that the liquid for moving chips is a coolant. In the liquid ejection unit 11, changes can be made to the nozzle position, the ejection direction of the coolant from the nozzle, the coolant ejection pressure, and the like. The liquid ejection unit 11 preferably has a plurality of nozzles. With one nozzle, the liquid ejection region will have a space region that is hidden by a component of the machine tool. Having entered this space region, the chips are difficult to be moved, because the liquid flow from the nozzle cannot sufficiently act on the chips.

The imaging unit 12 is, for example, a camera equipped with an imaging element, such as a CCD or a CMOS, and can capture an image inside the machine tool 10. The imaging unit 12 is placed in the machining region in the machine tool 10. The imaging unit 12 is fixed, for example, at an upper portion in the machine tool 10. Desirably, the imaging unit 12 (camera) placed in the machining region is fixed at such an angle of view that the image of at least part of the horizontal surfaces and at least part of the side surfaces defining the machining region can be captured by one shot. The imaging unit 12 placed in the machining region may be fixed and placed at such an angle of view that the image of the horizontal surfaces and the side surfaces which entirely include the machining region, including the surface of a table on which the workpiece is placed, can be captured by one shot.

The imaging unit 12 can output the captured image to the display device 30 as described later. The machine tool 10 may include a plurality of the imaging units 12 within the machine tool, depending on the performance and the image capture area of the imaging unit 12. The machine tool 10 according to the present embodiment can include two imaging units 12. When two imaging units 12 are included, too, by arranging them such that the image of a region that cannot be captured by one imaging unit can be captured by the other imaging unit, the whole machining region in the machine tool can be checked from the images captured by the imaging units.

The machine coordinate acquisition unit 13 can acquire machine coordinates representing the positions in the machine tool 10 of movable components, such as a pallet 14, a table 16, and a main shaft 22, each of which will be detailed later, installed in the machine tool 10. The acquired machine coordinates can be transmitted to a later-described liquid ejection control unit 39 of the display device 30. The machine coordinates may be a position information transmitted from an NC controller to the machine tool 10 for machining, or may be a position information acquired using a sensor.

The display device 30 includes: an arithmetic unit 31 that processes an image captured by the imaging unit 12 of the machine tool 10 and transmits a signal to the machine tool; a display unit 32 that displays an image captured by the imaging unit 12; a storage unit 33 that stores, as necessary, information to be processed by the arithmetic unit 31, such as images and positions; and an input unit 34 that outputs an input signal to the arithmetic unit 31. The display device 30 is a device having a function of receiving and displaying an image, such as a computer or a tablet. The display device 30 and the machine tool 10 can perform wired or wireless communication. The display device 30 may be included in the machine tool 10.

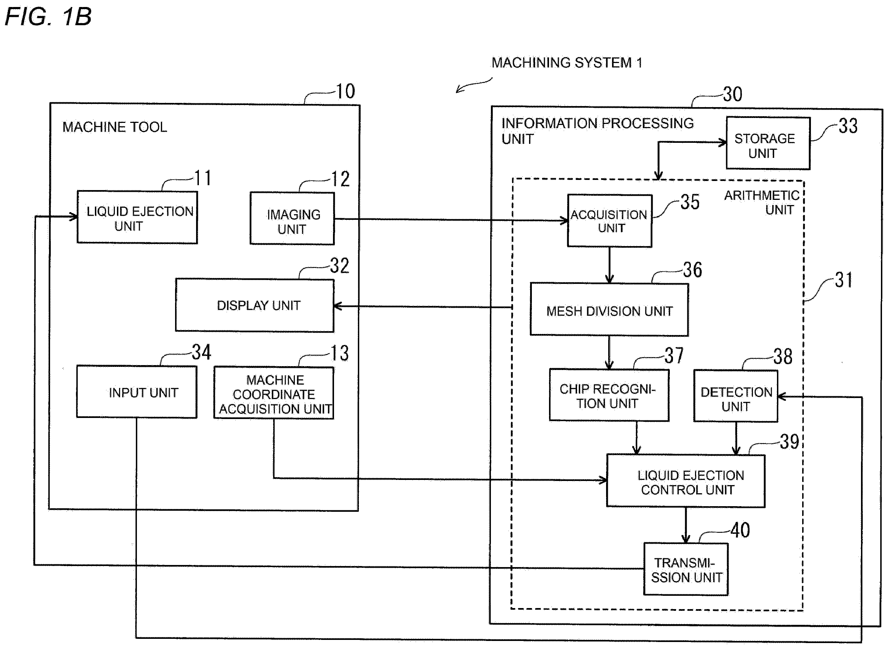

FIG. 1B shows a configuration of a machining system 1X in another embodiment. The machining system 1X includes a machine tool 10X and an information processing device 30X. The information processing device 30X includes: an arithmetic unit 31 that acquires (receives) and processes an image captured by an imaging unit 12 of the machine tool 10X; and a storage unit 33 that stores, as necessary, information to be processed by the arithmetic unit 31, such as images and positions. The information processing device 30X can also be referred to as an image processing device. The arithmetic unit 31 detects an input to the predetermined position in the image displayed on the display unit 32, and transmits an ejection signal to the machine tool 10 for ejecting a liquid from the liquid ejection unit to a related area inside the machine tool 10 related to the predetermined position, based on a detection signal according to the detection. On the other hand, the machine tool 10X includes: a display unit 32 that displays an image captured by the imaging unit 12 and an image created through processing at the arithmetic unit 31; and an input unit 34 that outputs an input signal to the arithmetic unit 31. The display unit 32 and the input unit 34 may be included in an operation panel of the machine tool 10X. The display unit 32 and the input unit 34 may be both installed in each of the information processing device 30X and the machine tool 10X, so that the operator can select and use any of the display units 32 and the input units 34.

The display unit 32 is, for example, a computer display, or an operation panel monitor of the machine tool 10X, on which an image that has been captured by the imaging unit 12 of the machine tool 10 and has been output to the display device 30 or the information processing device 30X can be displayed. Also, an image processed by the arithmetic unit 31 in relation to the captured image may be displayed. For example, a mesh created in a mesh division unit 36 as described later may be displayed in combination. In other words, the detection unit 38 may detect the input signal in association with the mesh region. For example, when having detected the input signal at a position within one mesh region, the detection unit 38 may detect the instructed position as referring to the whole one mesh region. For the processing as described later, the display unit 32 may be, for example, a touch screen which allows the operator to directly input instructions on the basis of the displayed image by touching the image, such as a resistive type display or a capacitive type display.

The input unit 34 is, for example, a mouse which is a common input device to a computer, and in the display device 30 or the machine tool 10 (e.g., an operation panel), the operator can input some kind of instruction, such as position information, via the input unit 34. In a touch screen, a mechanism for detecting a position touched by the operator, which is a part of the aforementioned display or the like, can correspond to the input unit 34 (and a detection unit 38 as described later).

The arithmetic unit 31 includes an acquisition unit 35, a mesh division unit 36, a chip recognition unit 37, a detection unit 38, a liquid ejection control unit 39, and a transmission unit 40. The arithmetic unit 31 and each of the processing units 35 to 40 included in the arithmetic unit 31 include a general-purpose processor, such as a CPU or an MPU, that implements a predetermined function by executing a program. The arithmetic unit 31 and each of the processing units 35 to 40 included in the arithmetic unit 31 realize various processing operations in the display device 30 or the information processing device 30X by, for example, invoking and executing the control program stored in the storage unit 33. The arithmetic unit 31 and each of the processing units 35 to 40 included in the arithmetic unit 31 are not limited to the one that realizes a predetermined function through collaboration with hardware and software, and may be a hardware circuit specifically designed to realize a predetermined function. That is, the arithmetic unit 31 and each of the processing units 35 to 40 included in the arithmetic unit 31 can be realized by various processors, such as a CPU, an MPU, a GPU, an FPGA, a DSP, and an ASIC.

The acquisition unit 35 acquires an image captured by the imaging unit 12 and outputs the image to the display unit 32 or the mesh division unit 36.

The mesh division unit 36 can divide at least part of the image captured by the imaging unit 12 into a plurality of mesh regions. The mesh regions are divided regions of the captured image defined by a predetermined geometric shape (mesh). The imaging unit 12 performs imaging in the image capture area including a chip scattering area in which chips generated through machining may scatter. When an image is captured with the chip scattering area included, a plurality of chips may be included in the image. Analysis of them throughout the entire image takes time. To address this, the image is divided into mesh regions to calculate a probability for each mesh region, and on the basis of the probability, the presence or absence of the chips is determined. For example, when there are lots chips, the probability reaches 90 or so, with the maximum probability taken as 100, and when there are little or no chips, the probability drops to 20 or less. When the probability for one mesh region is greater than 20 and less than 70, it can be set such that there are a few chips. In this way, the presence or absence of the chips can be determined all at once by widely photographing the machining region.

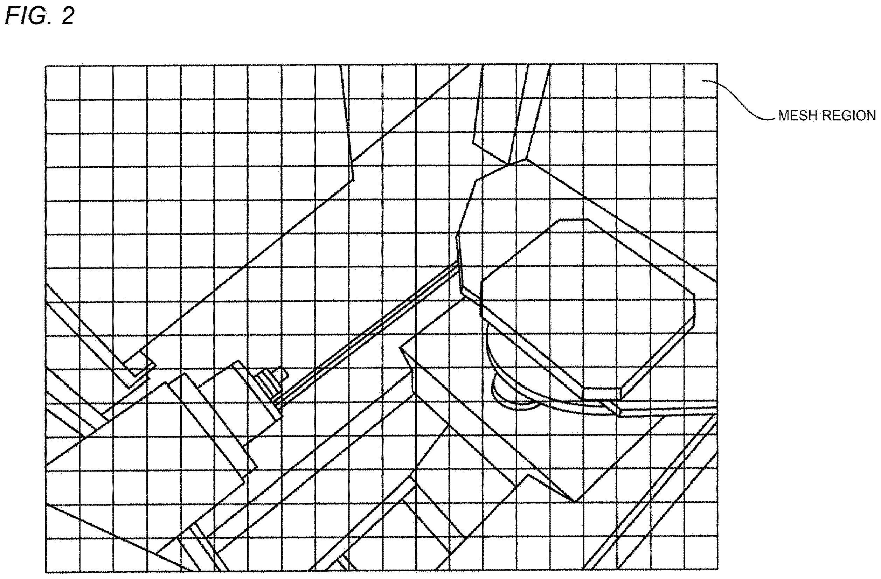

FIG. 2 is a diagram showing a captured image of the inside of the machine tool 10 divided into square mesh regions. Such an image constituted of a plurality of mesh regions can be called a mesh image. The size and shape of the mesh that defines the image may be configured to be adjustable as necessary. Note that the mesh image in the present specification is not limited to a new image created by adding information of the mesh to the captured image, and may be the captured image associated with the mesh. That is, a combination of the captured image and the mesh which are stored as separate data is also called a mesh image.

Although the details will be described later, the chip recognition unit 37 automatically recognizes the chips, on the basis of the mesh region created from the captured image in the mesh division unit 36, and determines whether or not chips are present in the mesh region, and how much amount of chips are present in the mesh region. When the presence of chips is determined, the chip recognition unit 37 recognizes the position on the captured image corresponding to the mesh region on the mesh image, as a chip accumulation position. Upon recognition of the chip accumulation position, the automatic detection signal is output to the liquid ejection control unit 39. The automatic detection signal includes at least information on the predetermined position recognized as having accumulated chips on the captured image. As described above, the mesh region may be associated with the information on the presence of chips. The information on the presence of chips may be, for example, the presence probability of the chips in each mesh region, or may be the presence or absence of the chips or the amount of the chips. The presence or absence of the chips or the amount of the chips may be judged or determined from the presence probability of the chips in each mesh region. The information may be historical data on experience, and the like, or may be a learning model based on the data collected by machine learning regarding the presence or absence and the amount of the chips. Alternatively, it may be configured to allow the information on the presence or absence of the chips, the amount of the chips, and the like to appear on the mesh region defined by the mesh.

The detection unit 38, on the basis of the image displayed on the display unit 32, receives a signal including a position information output from the input unit 34, which has been input by the operator by operating the input unit 34. Therefore, when the chips are determined as present by the operator on the basis of the image captured by the imaging unit 12, the accumulation position of the chips instructed by the operator via the input unit 34 can be detected. The input signal and the mesh region may be related with each other such that, when having detected the input signal at a position within one mesh region, the detection unit 38 can detect the chip accumulation position as referring to the whole one mesh region. Upon detection of the input to the predetermined position, the detection unit outputs a detection signal to the liquid ejection control unit 39. The detection signal includes at least the information of the predetermined position instructed by the operator. For example, when the input unit 34 is a mouse as described above, the detection unit 38 can detect the position instructed by the operator using the mouse. The input unit 34 and the detection unit 38 may be configured integrally. In this case, for example, when the display unit 32 is a touch screen as described above, the input unit 34 and the detection unit 38 can detect the position touched (or, input) by the operator on the touch screen.

The liquid ejection control unit 39 sets a position to which a coolant is to be ejected, based on the automatic detection signal or the detection signal. On the basis of the automatic detection signal or the detection signal output from the chip recognition unit 37 or the detection unit 38, a predetermined position in the captured image is acquired, and a related area related to the position where chips are accumulated inside the machine tool is acquired. The related area is roughly divided into, for example, a first related area (e.g., a surface of the table, the pallet or the like) that extends in a substantially horizontal direction (e.g., a direction forming 30° or less with the horizontal direction), and a second related area (e.g., a surface of the main shaft or a wall surface) that extends in a direction intersecting with the direction in which the first related area extends (e.g., a direction forming an angle of more than 30° with the horizontal direction, a direction forming an angle of 30° or less with the vertical direction). The coolant ejection path is different between in the first related area and in the second related area. The liquid ejection control unit 39 sets a predetermined coolant ejection path, which will be described in details later, depending on which related area a coolant is to be ejected. Then, the liquid ejection control unit 39 outputs, to the transmission unit 40, a control signal including at least information for ejecting a coolant to the related area. In this way, since the liquid ejection unit 11 can be controlled on the basis of the automatic detection signal or the detection signal, by controlling the liquid ejection unit 11 by allowing it to recognizing or inputting thereto a predetermined position, a coolant can be ejected to move the chips.

The transmission unit 40 outputs a coolant ejection signal to the liquid ejection unit 11. The ejection signal is a signal for ejecting a coolant for moving the chips to a related area related to the predetermined position instructed as having the chips. In accordance with the ejection signal, the nozzle of the liquid ejection unit 11 of the machine tool 10 ejects a coolant to the related area by a predetermined cleaning method. When the machine tool 10 and the display device 30 are integrally formed, the machining system 1 may be configured without including the transmission unit 40, to directly output the signal from the liquid ejection control unit 39 to the liquid ejection unit 11.

The storage unit 33 is a recording medium that records various information. The storage unit 33 is realized by, for example, a DRAM, an SRAM, a flash memory, an MRAM, a ReRAM, an FeRAM, an SSD (Solid State Device), a hard disk, and other storage devices, either singly or in combination. The storage unit 33 can store the captured image acquired by the acquisition unit 35, the mesh region (mesh image) created by the mesh division unit 36, the information on the predetermined position recognized as having the chips by the chip recognition unit 37 and the information on the amount of the chips, the information on the predetermined position detected by the detection unit 38, the information on the relationship between the predetermined position and the related area, and the like. In addition, each processing unit of the arithmetic unit 31 can read, as necessary, images and information stored in the storage unit 33. In the present specification, the description is given provided that an input of an image and information to each processing unit, and an output of the image processed and the information created by the each processing unit are directly input from a certain processing unit to the each processing unit and are directly output from the each processing unit to another processing unit, respectively. However, this is not a limitation, and each processing unit of the arithmetic unit 31 may read an image and information from the storage unit 33 at the time of image processing or signal detection, or the image processed and the information created in the each processing unit may be stored in the storage unit 33.

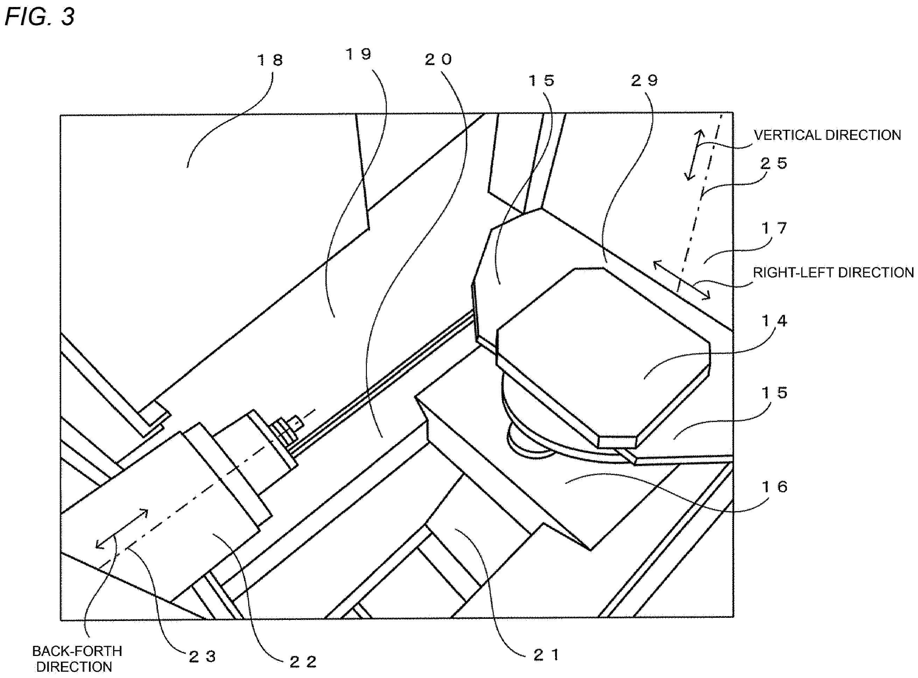

FIG. 3 shows a captured image of the inside of the machine tool 10, in which a pallet 14, a cover 15, a table 16, a revolving door 17, a side surface 18, a sloped surface 19, a protector 20, a chute 21, and a main shaft 22 are shown. In the present embodiment, with a longitudinal axis 23 of the main shaft 22 shown in FIG. 3 taken as the front and rear directions inside the machine tool 10, the root end side of the main shaft 22 is referred to as the front side, and the tip end side thereof is referred to as the rear side. The horizontal direction orthogonal to the longitudinal axis 23 is referred to as the right and left directions, and the vertical direction orthogonal to the longitudinal axis 23 is referred to as the up and down directions.

The imaging unit 12 captures an image of the inside or a target area including a side surface and a horizontal surface in the machine tool 10 by one shot. The imaging unit 12 is fixed at an upper portion in the machine tool. This makes it possible to perform imaging over a wide area including a side surface and a horizontal surface in the machine tool, inclusive of a chip scattering area in which chips generated during machining may scatter. By using the image recognition by the operator, a liquid ejection path that enables efficient chip movement can be created. However, when with the imaging unit 12 attached, for example, at the tip end of a robot arm, imaging or cleaning is performed while moving the robot arm, it is difficult to perform imaging over a wide area including a side surface and a horizontal surface in the machine tool, and also difficult to use the image recognition by the operator. The display device 30 or the display unit 32 may be a device or unit that displays an image captured by the imaging unit 12, except when the imaging unit 12 performs imaging while the target area is irradiated with laser beams.

The pallet 14 is a table on which the workpiece 24 is placed and secured. The machine tool 10 can include a plurality of pallets 14. In this case, when changing the workpiece to be processed, the workpiece can be changed by replacing the pallet 14, which is time effective. The surface of the pallet 14 is one of the first related areas.

The cover 15 is a component situated on the right and left sides of the pallet 14 in FIG. 3, and when the below-described revolving door 17 revolves to replace the pallet 14, for example, the cover lifts up the pallet 14 and separates it from the table 16. In the present embodiment, the cover 15 is fixed to the revolving door 17. The inner wall surface of the cover 15 is one of the second related areas.

The table 16 is a component to which the pallet 14 can be attached. The table 16 is movable in the front and rear directions, and thus, a workpiece 24 fixed on the pallet can be moved. In addition, a least part of the table is rotatable in the horizontal direction, and thus, a workpiece fixed on the pallet can be rotated. The surface of the table 16 is one of the first related areas.

The revolving door 17 can revolve about an axis 25. When revolving, the cover 15 separates the pallet 14 from the table 16, and the revolving door 17 revolves together with the pallet 14 and the cover 15. In this way, the pallet 14 with the processed workpiece thereon can be delivered out into a pallet stocker 26, and another pallet 14 with a workpiece to be processed next secured thereon can be loaded into the machine tool from the pallet stocker. The cover 15 may be attached to the revolving door both on its machine tool inner side and on its stocker side, so that the delivery and loading of the pallet can be done simultaneously when the revolving door revolves by 180 degrees. The inner wall surface of the revolving door 17 is one of the second related areas.

The side surface 18 is an openable and closable wall of the machine tool 10. The side surface 18 defines the inside and the outside of the machine tool 10, and when the side surface 18 is open, the operator can enter the inside of the machine tool 10. A side surface 27 (not shown) at a position facing the side surface 18 defines the inside of the machine tool 10 and a tool stoker 28. The tool stocker 28 stores a plurality of tools, and during the machining, the side surface 18 opens as necessary, so that the tool attached to the main shaft 22 can be replaced with another tool stored in the tool stoker 28. The surface of the side wall 18 is one of the second related areas.

The chute 21 is a place into which the chips flow by cleaning. The sloped surface 19 and the protector 20 are provided below the revolving door 17 and the side surfaces 18 and 27, and are each inclined toward the chute so that the chips can easily flow into the chute 21. The surface of the chute 21 is one of the second related areas.

With a tool attached to its tip, the main shaft 22 is rotated about the longitudinal axis 23 thereof, by which the workpiece can be processed. In the present embodiment, as shown in FIG. 3, the main shaft 22 has a cylindrical outer shape. The surface of the main shaft 22 is one of the second related areas.

The surfaces of the sloped surface 19 and the protector 20 can be either the first related area or the second related area, depending on the inclination angle with respect to the horizontal direction.

### (Coolant ejection path)

Next, a coolant ejection path according to the present embodiment will be described. Here, when a coolant is ejected based on the automatic detection signal from the chip recognition unit 37, the ejection is referred to as an automated cleaning. When a coolant is ejected based on the detection signal input by the operator is referred to as an instructed cleaning. In either case, an automated cleaning or an instructed cleaning, a similar coolant ejection path is determined for the same related areas. With regard to the coolant ejection path, a coolant ejection path corresponding to the related area may be selected from among a plurality of coolant ejection paths stored in advance in the storage unit 33, or an optimal coolant ejection path may be created based on a predetermined algorithm. An optimal coolant ejection path may be created using a predetermined learning model.

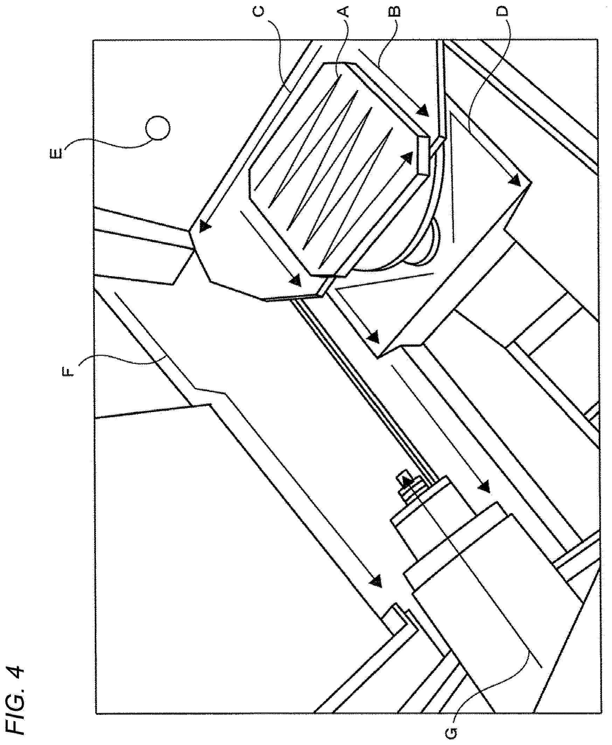

FIG. 4 shows an example of a path for ejecting a coolant in order to move chips. The image of FIG. 4 indicates a coolant ejection path when the chips are present on the pallet 14, the cover 15, the table 16, the revolving door 17, the side surface 18, the sloped surface 19, the protector 20, and the main shaft 22. The display unit 32 displays an image captured by the imaging unit 12 and an ejection path for ejecting a liquid to the related area. In other words, upon selection of a predetermined position on an image captured by the imaging unit 12, the display unit 32 can display (a) the image, and (b) a liquid ejection path in the related area, in an overlapping manner. This makes it easier for the operator to recognize the ejection path in each image.

First, a cleaning performed when the chips are present on the pallet 14 and the cover 15 will be described. In the present embodiment, when the pallet 14, which moves in the front and rear directions, is on the rear side, the pallet 14, the cover 15, and the boundary 29 between the revolving door 17 and the cover 15 are collectively cleaned. When moved, the chips flow downward. Therefore, the pallet 14 on the upper side, the cover 15, and the boundary 29 are cleaned in this order. For example, for cleaning the pallet 14, the coolant is ejected so as to hit the surface in a zigzag or reciprocating manner from the rear side toward the front side, as indicated by the arrow A. Thus, the chips on the pallet can be moved all together. Although FIG. 4 shows nothing on the pallet 14, the coolant may be ejected to the pallet with a workpiece placed thereon. By ejecting the coolant in a zigzag or reciprocating manner to the pallet in this way, even when a workpiece is placed thereon, the pallet 14, including the workpiece, can be totally cleaned. As described above, even when no accurate position of the chips is instructed, by ejecting the coolant in a zigzag or reciprocating manner from one end to the other of each region, the chips on the each region can be efficiently removed.

For cleaning the cover 15, the coolant is ejected linearly from the rear side to the front side, as indicated by the arrow B. This causes the chips to flow into the chute 21.

For cleaning the boundary 29 between the revolving door 17 and the cover 15, the coolant is ejected linearly in the transverse direction along the boundary 29, as indicated by the arrow C. This causes the chips to flow into the chute 21.

Next, a cleaning of the table 16 will be described. For cleaning the table 16, the coolant is ejected as indicated by the arrow D, from the center in the left-right direction on the front side to the outward in the left-right direction and on the rear side, in conformity with the shape of the peripheral component, and then from the rear side to the front side. This causes the chips to flow into the chute 21.

The removal of the chips adhering to the revolving door 17 will be described. Since the revolving door 17 is configured to stand substantially upright, the chips adhering thereto is small in amount, and when the coolant is ejected, the chips flow down with gravity. Therefore, the coolant is ejected directly to the related area recognized as having chips, as indicated by the circle E. The coolant ejection to the side surface 18 is similarly to that to the revolving door 17. The chute 21 is in place where even when the chips are somewhat accumulated, machining errors or the like hardly occurs, and where the coolant ejected to the other related areas also flows thereinto and causes the chips to move. Therefore, the coolant ejection is performed similarly to that to the revolving door 17. In this way, at the place where chips come off easily, the coolant can be pin-pointedly ejected thereto, to effectively remove the chips.

A cleaning of the sloped surface 19 will be described. On the sloped surface 19, the chips having flown from the revolving door 17 and the like may accumulate. Therefore, the coolant is continuously discharged linearly along the boundary between the side surface 18 and the sloped surface 19 as indicated by the arrow F from the rear side to the front side. In this case, the angle may be altered as indicated by the arrow F. This causes the chips to flow into the chute 21. To the protector 20, similarly to the sloped surface 19, the coolant is ejected linearly from the revolving door 17 side along near the top end of the protector. In this way, at the related areas which are inclined, the coolant can be ejected so as to hit the upper side of each region, or hit it linearly, to efficiently remove the chips.

A cleaning of the main shaft 22 will be described. In the present embodiment, the main shaft 22 has a columnar shape as described above. Therefore, the coolant is ejected along the longitudinal axis 23 of the main shaft 22 toward the head of the main shaft 22 as indicated by the arrow G from the front side to the rear side, which can cause the chips to move downward.

In this way, a liquid can be ejected in an appropriate manner depending on the instructed position. As described above, in the first related area extending in a substantially horizontal direction, it is desirable to drive the liquid ejection unit so that the liquid hits the area in a zigzag or reciprocating manner. On the other hand, in the second related area which is inclined with respect to the horizontal direction, it is desirable to drive the liquid ejection unit such that the liquid hits the area linearly.

In the present embodiment, by relating the position in the image to the position inside the machine tool, it is possible to identify which position in the image corresponds to which area in the above areas. Thus, when a predetermined position in the image is instructed, the coolant can be ejected along the cleaning path as described above from the liquid ejection unit 11 to the related area inside the machine tool related to the predetermined position. The ejection path can be modified depending on the structure of the machine tool or the position of the liquid ejection unit 11. The information on the predetermined position that has been input by the operator via the input unit 34 and output from the input unit 34 is on a position in the two-dimensional image displayed on the display unit 32. The information on the predetermined position is related to the actual position of the three-dimensional space in the machine tool. Differing from the coordinate system in the image, an actual position in the machine tool is determined by coordinates (X, Y, and Z-axes), with the Z-axis direction being the main shaft direction. That is, the information on the predetermined position and the related areas are associated with the X, Y, and Z coordinates in the machine tool.

Since the pallet 14 and the table 16 are movable in the front and rear directions in the present embodiment, the regions thereof on the image may overlap with those of the chute 21 and the protector 20. It is therefore difficult to identify whether the related area of the predetermined position on the captured image is on the pallet 14 or the table 16, or on the chute 21 or the protector 20. Here, as mentioned above, the chute 21 and the protector 20 are inclined, and the chips are less likely to remain thereon as compared to on a horizontal surface. Therefore, when it is instructed that the chips are at a predetermined position corresponding to the chute 21 or the protector 20, the liquid ejection control unit 39 sets a cleaning method of the pallet 14 or the table 16, on the presumption that the chip are on the pallet 14 or the table 16. In this way, even when the machine tool includes a movable part, an area to which a coolant is to be ejected can be determined, in consideration of the movable range of the movable part. Moreover, the position information on the movable component, such as the table 16, can be acquired by the machine coordinate acquisition unit 13 of the machine tool 10. Therefore, even when the table 16 or other movable components has moved, and the position thereof at the time of coolant ejection is different from that on the captured image at the time of imaging, the angle of the liquid ejection unit 11 or other conditions can be corrected, in consideration of the position of the movable part. In this way, the chips can be efficiently removed by ejecting the coolant to an appropriate area where the movable part is actually present, rather than to the entire region where the movable part is possibly present, or rather than to the position of the movable part displayed on the captured image. In the present embodiment, the pallet 14 and the table 16 are included in the movable part.

### (Automated cleaning)

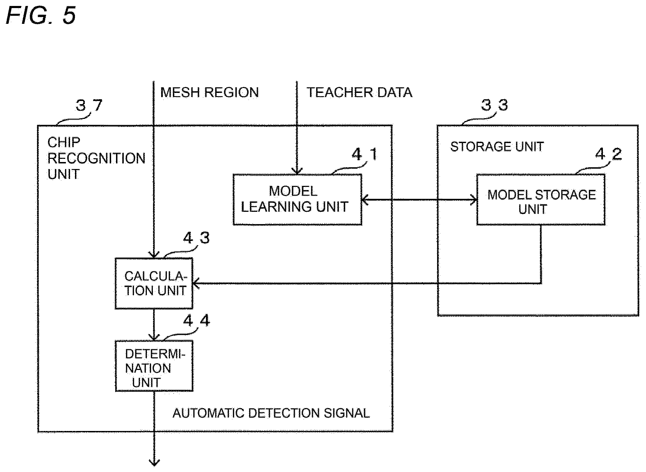

A method of automatically recognizing chips using a captured image will be described. FIG. 5 is a schematic diagram of a configuration of a chip recognition unit 37 for automatically recognizing chips. As shown in FIG. 5, the chip recognition unit 37 includes a model learning unit 41, a calculation unit 43, and a determination unit 44. Further, the storage unit 33 includes a model storage unit 42.

The model learning unit 41 creates a learning model. When one of the mesh regions created by the mesh division unit 36 is input as an input data, the learning model can calculate and output a probability that the input data corresponds to which of the predetermined items regarding the chips in the mesh region. The learning model can be prepared by, for example, inputting pairs of input and output data as teacher data in advance into a CNN (convolutional neural network) for learning. Atypical CNN, which is often used for image feature extraction, is a learning method that extracts features of the image through convolution layers and pooling layers, and inputs the features to a neural network to be processed there. The learning model may be prepared using a learning method other than the CNN In the present embodiment, a mesh region can be used as an input data, and the information on the presence or absence and the amount of the chips in the mesh region can be used as an output data. The accuracy of chip recognition by the learning model can be enhanced by inputting more teacher data for the model to learn the presence or absence and the amount of the chips related to more mesh regions (i.e., more various mesh regions).

The model storage unit 42 stores a learning model for automatically determining the presence or absence of the chips. The learning model is read into the calculation unit 43 as necessary. In the present embodiment, the chip recognition unit 37 includes the model learning unit 41, and the storage unit 33 includes the model storage unit 42. This is merely an example, and a learning model may be created by a device different from the display unit 30 and the information processing unit 30X, which may be then stored in the storage unit 33, so that the learning model can be read, as necessary.

The calculation unit 43 calculates a probability that corresponds to the item predetermined for the chips in the mesh region. Specifically, using the learning model learned by the model learning unit 41, the calculation unit 43 can calculate a probability regarding to which of the following three items the mesh region having been input as an input data corresponds: "Lots of chips present (Class 2)", "Few chips present (Class 1)", and "No chips present (Class 0)". The items may be further subdivided and used for calculation, or a probability of the presence of the chips may be simply calculated.

From the probability calculated by the calculation unit 43 for the input mesh region, the determination unit 44 determines to which of the three Classes 0 to 2 the chips in that mesh region correspond. The determination unit 44 can set how determination is to be made from the probability calculated by the calculation unit 43 for the chips present in the mesh region. For example, it may be determined as corresponding to the highest item among the probabilities of Classes 0 to 2 calculated by the calculation unit 43. In addition, for example, like when "Class 2" is calculated as 25%, "Class 1" is calculated as 35%, and "Class 0" is calculated as 40%, when the probability that "chips are present (Class 2 + Class 1)" is higher than the probability that "chips are absent (Class 0)", it may be determined as corresponding to "Class 1" (or "Class 2"). When having determined that the chips are present in the mesh region (i.e., corresponding to Cass 2 or 1), the determination unit 44 outputs an automatic detection signal having at least the position information on the captured image corresponding to the position of the mesh region in the mesh image, to the liquid ejection control unit 39 as described above. The automatic detection signal may include information on the amount of the chips.

In this manner, the present machining system 1 can automatically recognize the presence or absence of the chips, based on the image captured by the imaging unit installed in the machine tool 10.

In the present embodiment, the machining system 1 can automatically perform automated cleaning of ejecting a coolant, by automatically recognizing the chips based on the image captured by the imaging unit 12, during machining or after machining of a workpiece. The automated cleaning may be performed periodically, or in response to some instructions, such as the instruction by the operator.

In the automated cleaning, the chips may be recognized as present in a plurality of related areas in some cases. In order to cope with such a case, it is preferable to set the sequence of cleaning according to some rules. For example, with the priority assigned to the related areas in advance, the sequence of cleaning may be set according to the priority and the accumulation state of the chips (e.g., the amount of the chips) recognized by the chip recognition unit. The priority may be set such that, for example, the highest priority is assigned to the pallet 14 which is considered to have much influence on the machining, the second highest priority is assigned to the table 16 or the sloped surface 19 where the chips tend to accumulate and to the revolving door 17 which is movable to the outside of the machine tool, and the third priority is assigned to the others. The main shaft may be cleaned only at the time of tool replacement. When the coolant ejection according to the preset sequence of cleaning is completed, a series of steps of automated cleaning for the chips recognized on the captured image ends.

### (Control example of automated cleaning)

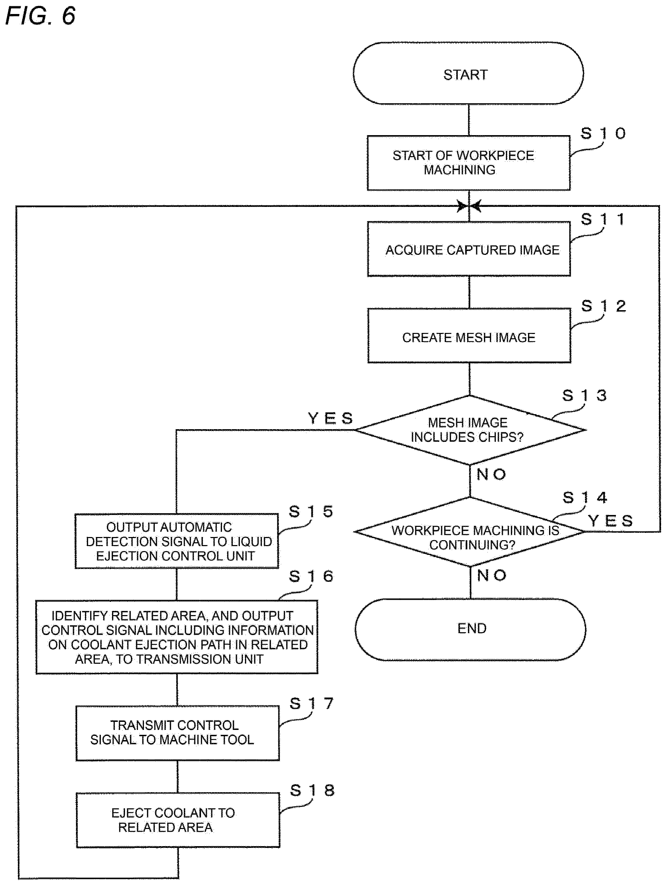

A control example of the automated cleaning of the machining system 1 in the present embodiment will be described below with reference to the flowchart of FIG. 6. FIG. 6 is a flowchart showing an operation example of the automated cleaning of the machining system 1 in the present embodiment.

First, a workpiece is delivered into a machine tool, and machining is started (S10). The machining generates chips.

Next, the imaging unit 12 of the machine tool 10 captures an image, and the acquisition unit 35 of the display device 30 or the information processing device 30X acquires the captured image (S11). The mesh division unit 36 divides the captured image captured in step S11 into a plurality of mesh regions, and creates a mesh image (S12). The chip recognition unit 37 determines the presence or absence of the chips or the amount of the chips for each mesh region of the mesh image created in step S12 (S13). If no chips are recognized and the machining is continuing, the process returns to step S11, and the captured image is acquired. If no chips are recognized and the machining is completed, the operation of the machining system 1 ends (S14). When the chips are recognized, an automatic detection including information on the predetermined position on the captured image corresponding to the position of the mesh region on the mesh image and information on the amount of the chips is output to the liquid ejection control unit 39 (S15).

The liquid ejection control unit 39 identifies the related area from the automatic detection signal, and creates a control signal for controlling the liquid ejection unit 11, which is related to a coolant ejection path selected from among those in correspondence to the above related area. Then, the control signal is output to the transmission unit 40 (S16). When there are a plurality of related areas, the control signal includes information on the sequence of cleaning, i.e., the sequence of ejecting a coolant to the related areas. The transmission unit 40 transmits the ejection signal to the machine tool 10 (S17).

The machine tool 10 controls the liquid ejection unit 11 based on the control signal, and ejections a coolant to the related areas according to the sequence of cleaning (S18). When the coolant ejection to all the related areas is completed, the process returns to the step S11 again, and the above steps are repeated until the machining of the workpiece ends. The foregoing is the cleaning process by the automated cleaning.

### (Instructed cleaning)

Although the chips can be mostly removed by the automated cleaning, the chip recognition section cannot always recognize all chips. When there are some chips that cannot be recognized by the chip recognition unit, the chips may continue to remain in the machine tool, which may cause machining errors or operation failure. Moreover, when there are some chips left unremoved, they accumulate and become difficult to be removed by the coolant, which necessitates the removal of the chips by the operator who enters the inside of the machine tool. In view of the above, the present machining system 1 includes a configuration to perform an instructed cleaning, so that the chips that cannot be removed by the automated cleaning can be moved according to the instruction by the operator on the coolant ejection position.

As described above, the operator can determine whether the chips are present or not by checking the image displayed on the display unit 32. When the chips are determined as present, the operator can instruct the position in the image by a predetermined input manner. The detection unit 38 detects the position as an input to a predetermined position where the chips are accumulated, and outputs the detection signal including at least the information of the predetermined position to the liquid ejection control unit 39. In this way, the chips can be removed even when unrecognized automatically by the above-described chip recognition unit 37. In other words, the display device 30 or the information processing device 30X of the machining system 1 can eject a liquid to the related area inside the machine tool based on the predetermined position, by detecting the input to the predetermined position in the image at which chips to be moved are present, and thus, the chips can be efficiently removed.

In the present embodiment, when the operator inputs a cleaning instruction during automated cleaning, the machining system 1 can pause the automated cleaning and perform an instructed cleaning of the related area related to the position instructed by the operator.

For example, upon receiving the detection signal of the detection unit 38 during automated cleaning, the liquid ejection control unit 39 outputs to the transmission unit, a control signal for interrupting the automated cleaning process and ejecting a coolant to the related area inside the machine tool related to the predetermined position detected by the detection unit 38. Then, the transmission unit 40 transmits an ejection signal to the liquid ejection unit 11 so as to clean the related area. The liquid ejection control unit 39 outputs to the transmission unit 40, a control signal to resume the interrupted automated cleaning process after the completion of the cleaning in the related area. Then, the transmission unit 40 transmits the control signal to the liquid ejection unit 11, to resume the automated cleaning. It may be configured such that the liquid ejection unit 11 resumes the automated cleaning upon completion of the instructed cleaning, rather than configured such that the liquid ejection control unit 39 outputs a control signal for resuming the automated cleaning. After the operation is resumed, the machining system 1 performs chip removal according to the preset sequence of cleaning.

In this way, the operator can instruct the removal of chips based on the image displayed on the display unit 32. As a result, even when the operator is away from the machine tool 10, if the display device 30 or the display unit 32 and the input unit 34 are nearby, the operator can check the internal state of the machine tool 10 and instruct cleaning as necessary, via the display device 30 or the display unit 32 and the input unit 34.

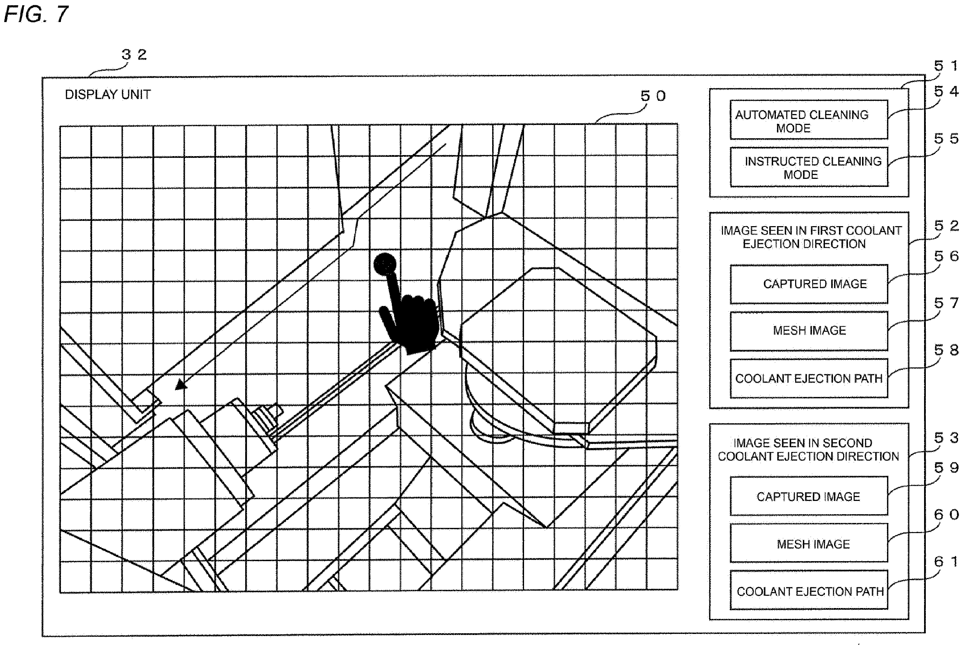

FIG. 7 illustrates an example of the display unit 32 of the machining system 1 configured to perform automated cleaning and instructed cleaning. The display unit 32 includes a screen section 50 that displays a captured image or a mesh image, a mode selection area 51, a first image selection area 52, and a second image selection area 53. Each of the selection areas 51 to 53 includes a region (selection section) on which a cleaning mode and an image to be displayed on the screen section 50 can be selected by the operator by inputting instructions (e.g., when the display unit 32 is a touch screen, by touching the display unit 32) which are then detected by the detection unit 38. The mode selection area 51 includes an automated cleaning mode selection section 54 and an instructed cleaning mode selection section 55. By selecting the selection section 54 or 55, the cleaning mode can be switched to the automated mode or the instructed mode.

The present embodiment includes two imaging units 12, and the first image selection area 52 displays an image as viewed from one of the two. The image indicates the ejection direction of a first coolant to be ejected from one of the liquid ejection units 11. The first image selection area 52 includes a capture image selection section 56, a mesh image selection section 57, and a coolant ejection path selection section 58. When the operator selects the capture image selection section 56, an image captured by the imaging unit 12 is displayed on the screen section 50. When the mesh image selection section 57 is selected, a mesh image created by the mesh division unit 36 is displayed on the screen section 50.

For example, in the instructed cleaning mode, when the operator instructs a predetermined position (by, for example, touching the screen section 50), on the captured image or the mesh image displayed on the screen section 50, a coolant ejection path for the related area corresponding to the instructed predetermined position is created. When the coolant ejection path selection section 58 is selected, the above coolant ejection path is displayed on the screen section 50. The coolant ejection path may be displayed on the captured image or may be displayed on the mesh image. This allows the operator to confirm the coolant ejection path. In the automated cleaning mode, the chips are automatically recognized, and a coolant ejection path for the region where the chips are present is created. When the coolant ejection path selection section 58 is selected, the above coolant ejection path is displayed. When there a plurality of related areas where the presence of chips is recognized, the coolant ejection paths for all the related areas may be displayed. The coolant ejection path may be displayed, for example, in different colors or different widths so that the ejection path which is currently active can be distinguished in some way. Alternatively, only the coolant ejection path which is currently active may be displayed.

The second image selection area 53 displays an image as viewed from the other imaging unit 12 different from the image displayed in the first image selection area 52. The image indicates the ejection direction of a second coolant to be ejected from the other liquid ejection unit 11. The second image selection area 53 includes a capture image selection section 59, a mesh image selection section 60, and a coolant ejection path selection section 61, and the selection sections 59 to 61 operate similarly to the selection sections 56 to 58 of the first image selection area 52.

FIG. 7 shows a coolant ejection region when the position instructed by the operator is in the related area on the sloped surface 19. The position instructed by the operator is indicated by a black circle. Since the related area is on the sloped surface 19, as indicated by the arrow F in FIG. 4, a coolant ejection path for ejecting a coolant linearly and continuously along the boundary between the side surface 18 and the sloped surface 19 is displayed.

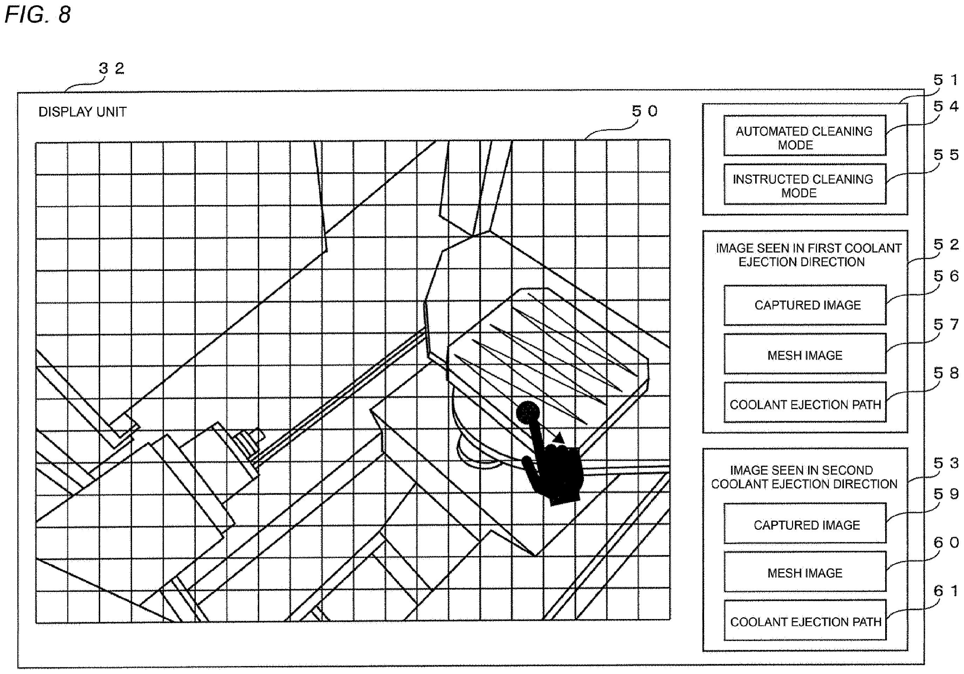

FIG. 8 is an example that displays a coolant ejection path different from FIG. 7. FIG. 8 shows a coolant ejection region when the position instructed by the operator is in the related area on the pallet 14. Like in FIG. 7, the position instructed by the operator is indicated by a black circle. Since the related area is on the pallet 14, as indicated by the arrow A in FIG. 4, a coolant ejection path for ejecting a coolant so as to hit the surface in a zigzag or reciprocating manner from the rear side toward the front side of the pallet 14. That is, when the operator selects a predetermined position on an image captured by the imaging unit 12, the display unit 32 overlappingly displays (a) the image and (b) an ejection path for ejection to the related area.

In the present embodiment, the display unit 32 includes the screen section 50 and the selection sections 54 to 61. The display unit 32 may include only the screen section 50, and the other selection sections may be each configured as a mechanical switch.

### (Control example of instructed cleaning)

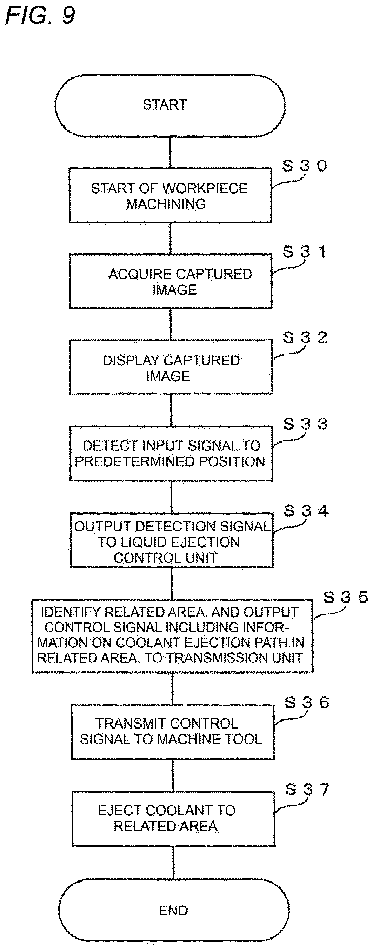

Next, a control example of the instructed cleaning of the machining system 1 in the present embodiment will be described below with reference to the flowchart of FIG. 9. FIG. 9 is a flowchart showing an operation example of the instructed cleaning of the machining system 1 in the present embodiment.

First, a workpiece is delivered into a machine tool, and machining is started (S30). The machining generates chips. Next, the imaging unit 12 of the machine tool 10 captures an image, and the acquisition unit 35 of the display device 30 or the information processing device 30X acquires the captured image (S31). After the image acquisition in the step S31, the captured image is displayed on the display unit 32 (S32).

When the operator recognizes the chips on the displayed image and instructs via the input unit 34 a predetermined position where the chips are present, the detection unit 38 detects it as an input to the predetermined position (S33). Upon detection of the input to the predetermined position, the detection unit 38 outputs to the liquid ejection control unit 39 the detection signal including the predetermined position information instructed by the operator (S34).

The liquid ejection control unit 39 identifies the related area from the detection signal, and creates a control signal for controlling the liquid ejection unit 11, which is related to a coolant ejection path selected from among those in correspondence to the above related area. Then, the control signal is output to the transmission unit 40 (S35). The transmission unit 40 transmits an ejection signal to the machine tool 10 (S36).

The machine tool 10 controls the liquid ejection unit 11 based on the control signal, and ejects a coolant to the related area according to the sequence of cleaning as described above (S37). When the coolant ejection to the related area(s) is completed, the process ends. The foregoing is the cleaning process by the instructed cleaning.

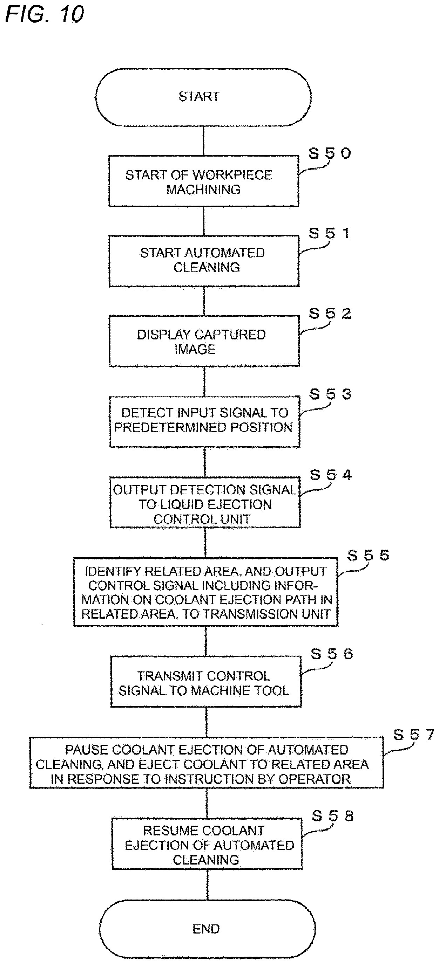

Next, another control example of the instructed cleaning of the machining system 1 according to the present embodiment will be described with reference to the flowchart of FIG. 10. FIG. 10 is a flowchart showing an operation example of performing the instructed cleaning during the automated cleaning of the machining system 1 according to the present embodiment.

First, a workpiece is delivered into a machine tool, and machining is started (S50). The machining generates chips. Then, the machining system 1 starts automated cleaning (S51). The automated cleaning in the flowchart corresponds to the steps S11 to S18 in the flowchart of automated cleaning. Upon acquisition of a captured image in the automated cleaning, the captured image is displayed on the display unit 32 (S52).

When the operator recognizes the chips on the displayed image and instructs via the input unit 34 a predetermined position where the chips are present, the detection unit 38 detects it as an input to the predetermined position (S53). Upon detection of the input to the predetermined position, the detection unit 38 outputs to the liquid ejection control unit 39 the detection signal including the predetermined position information instructed by the operator (S54).

The liquid ejection control unit 39 identifies the related area from the detection signal, and creates a control signal for controlling the liquid ejection unit 11, which is related to a coolant ejection path selected from among those in correspondence to the above related area. Then, the control signal is output to the transmission unit 40 (S55). The transmission unit 40 transmits an ejection signal to the machine tool 10 (S56).

The machine tool 10 controls the liquid ejection unit 11 based on the control signal, to pause the coolant ejection of the automated cleaning, and ejects a coolant to a related area related to the predetermined position instructed by the operator (S57). When the coolant ejection to the related area(s) is completed, the paused automated cleaning is resumed (S58). When the automated cleaning is completed, the process ends. The foregoing is the cleaning process performed in response in the instruction by the operator on a predetermined position. The interruption of the above cleaning in the automated cleaning can be done at any timing after the acquisition of the captured image by the step S11 in the flowchart of automated cleaning.

The display device, the machine tool, and the liquid ejection method according to the present disclosure are implemented in cooperation with a hardware resource, such as a processor, a memory, and a program. The present disclosure is not limited to the illustrated embodiment, and various improvements and modifications in design can be made without departing from the essence of the present disclosure.

### [Reference Signs List]

- 1, 1X: machining system
- 10, 10X: machine tool
- 11: liquid ejection unit
- 12: imaging unit
- 30: display device
- 30X: information processing device
- 32: display unit
- 37: chip recognition unit
- 38: detection unit
- 39: liquid ejection control unit
- 40: transmission unit

## Claims

1. A display device for displaying an image captured by an imaging unit included in a machine tool, the machine tool including a liquid ejection unit that ejects a liquid so as to move chips generated from a workpiece and the imaging unit that captures an image inside the machine tool, the display device comprising:
a display unit that displays the image captured by the imaging unit;
a detection unit that detects an input to predetermined position in the image displayed on the display unit; and
a transmission unit that transmits an ejection signal for ejecting a liquid from the liquid ejection unit to a related area inside the machine tool related to the predetermined position, based on a detection signal according to the detection.

2. The display device according to claim 1, wherein the liquid ejection unit is driven in at least one of the following ways:
(a) a liquid ejected from the liquid ejection unit hits the related area in a zigzag manner;
(b) a liquid ejected from the liquid ejection unit hits the related area in a reciprocating manner; and
(c) a liquid ejected from the liquid ejection unit linearly hits the related area.

3. The display device according to claim 1 or 2, further comprising a liquid ejection control unit that creates a control signal of the liquid ejection unit for ejecting the liquid from the liquid ejection unit to the related area, wherein the transmission unit transmits the control signal created by the liquid ejection control unit to the machine tool, based on the detection signal.

4. The display device according to claim 3, wherein the machine tool includes a movable part, and when the related area is on the movable part, the related area includes a movable range of the movable part.

5. The display device according to claim 4, wherein the liquid ejection control unit acquires a position information of the movable part, and limits ejection of the liquid to part of the related area, based on the position information.

6. The display device according to any one of claims 1 to 5, further comprising a chip recognition unit that recognizes an accumulation position at which chips are accumulated, based on the image captured by the imaging unit, wherein the transmission unit transmits the ejection signal for cleaning to a position related to the accumulation position, based on a signal from the chip recognition unit.

7. A machine tool, comprising:
a liquid ejection unit that ejects a liquid so as to move chips generated from a workpiece;
an imaging unit that captures an image inside the machine tool; and
a detection unit that detects an input to a predetermined position in the image displayed on the display unit, wherein
the liquid ejection unit that ejects the liquid to a related area inside the machine tool related to the predetermined position, based on a detection signal according to the detection.

8. A liquid ejection method for ejecting a liquid so as to move chips generated from a workpiece, the method comprising steps of:
displaying a captured image;
detecting an input to a predetermined position in the displayed captured image; and
ejecting a liquid to a related area inside the machine tool related to the predetermined position, based on a detection signal according to the detection.
